# EUROPÄISCHE PATENTSCHRIFT

(11) **EP 4 536 987 B1**
(45) Veröffentlichungstag und Bekanntmachung des Hinweises auf die Patenterteilung: **29.04.2026**
(21) Anmeldenummer: 23726857.8
(22) Anmeldetag: 11.05.2023
(51) Int. Cl.: F16D 21/06, F16D 23/12, F16H 63/02, F16H 63/30

(54) **TROCKENE DOPPELKUPPLUNG MIT INDIVIDUELL BETÄTIGBAREN TEILKUPPLUNGEN**
DRY DUAL CLUTCH WITH INDIVIDUALLY ACTUATABLE SUB-CLUTCHES
DOUBLE EMBRAYAGE SEC AVEC SOUS-EMBRAYAGES ACTIONNABLES INDIVIDUELLEMENT

(30) Priorität: 13.06.2022 DE 102022114761
(43) Veröffentlichungstag der Anmeldung: 16.04.2025
(73) Patentinhaber: Schaeffler Technologies AG & Co. KG, 91074 Herzogenaurach (DE)
(72) Erfinder: AHNERT, Gerd, 77880 Sasbach (DE); OBITZ, Alexander, 77815 Bühl (DE)
(74) Vertreter: Schaeffler Technologies
(86) Internationale Anmeldenummer: PCT/DE2023/100344
(87) Internationale Veröffentlichungsnummer: WO 2023/241751

(56) Entgegenhaltungen:
- DE-B3- 102022 114 608
- DE-B3- 102022 114 761
- US-A1- 2008 078 642

## Beschreibung

Die vorliegende Erfindung betrifft eine Doppelkupplung für ein Wendegetriebe, zum Einsatz in einem Kraftfahrzeug. Das Kraftfahrzeug ist bevorzugt eine Landmaschine wie insbesondere ein Traktor.

Meist werden entsprechende Wendegetriebe für Traktoren und Arbeitsgeräte verwendet, bei denen ein häufiger Wechsel zwischen Vorwärtsfahrten und Rückwärtsfahrten stattfindet. Wendegetriebe sind Schaltgetriebe, bei denen zumindest eine Drehrichtungsumkehr geschaltet werden kann. Solche Getriebe werden benötigt, wenn ein Antriebssystem zwei gleichwertige Drehrichtungen bereitstellen soll, die Umkehr sich jedoch nicht durch die Antriebsmaschine erzeugen lässt.

Ein Doppelkupplung mit einem daran angeschlossenen Wendegetriebe ermöglicht einen zumeist vollautomatischen Gangwechsel in den Vor- oder Rückwärtsgang ohne Zugkraftunterbrechung, dem so genannten Lastschaltwechsel sowie ohne Betätigung eines Kupplungspedals. Die Übertragung des Moments erfolgt über eine von zwei Teilkupplungen, die zwei Teilgetriebe mit einem Antrieb verbinden. Wie beim automatischen Getriebe mit hydraulischem Drehmomentwandler ermöglicht auch dieses Prinzip einen Gangwechsel ohne Zugkraftunterbrechung, indem gleichzeitig eine Teilkupplung schließt, während die andere öffnet.

In einer Doppelkupplung eines Doppelkupplungsgetriebes kommen in der Regel zwei nasslaufende Lamellenkupplungen oder Einscheibentrockenkupplungen zum Einsatz. Einscheibentrockenkupplungen in Doppelkupplungsgetrieben werden serienmäßig üblicherweise in der PKW-Kompaktklasse mit Motoren bis etwa 250 Nm Drehmoment eingesetzt, da die Abführung der größeren Verlustwärme bei höheren Leistungen schwierig zu realisieren ist.

Nasslaufende Kupplungen erlauben bei gleicher Baugröße höhere Drehmomente und Fahrzeugmassen. Die beim Schaltvorgang und Anfahren entstehende Verlustwärme wird über einen Kühlölstrom abgeführt. Als Ölsumpf wird üblicherweise das Getriebe selbst verwendet. Das Öl dient somit sowohl zur Kühlung der Kupplung als auch zur Schmierung des Radsatzes. Eine nasse Doppelkupplung hat immer ein gewisses Schleppmoment im geöffneten Zustand, dadurch kommt es zu höheren Leerlaufverlusten, was eine Wirkungsgradverminderung zur Folge hat. Zusätzlich dazu sorgt der Betrieb der Ölpumpe für eine Verringerung des Gesamtwirkungsgrades. Darüber hinaus benötigt eine nasse Doppelkupplung zusätzliche Komponenten für den Betrieb und zur Steuerung bzw. Regelung.

Aus dem Stand der Technik sind nasse Doppelkupplungen für Wendegetriebe bekannt, die insbesondere für Landmaschinen wie einem Traktor vorgesehen sind und mechanisch betätigt werden.

Oft benötigen entsprechende Doppelkupplungen jedoch eine Zug- und eine Druckbetätigung in entgegengesetzter Richtung, um die jeweilige Teilkupplung zu öffnen oder zu schließen. Darüber hinaus müssen nasse Doppelkupplungen mit einem Kühlkreislauf für das sie versorgende Schmieröl versehen sein. Entsprechende Nehmer/Geber-Anordnungen aus Betätigungshebeln und Betätigungslagern sowie dem Kühlkreislauf erfordern zum Teil einen erheblichen Aufwand an Bauteilen. Darüber hinaus ist eine solche Anordnung mit einem erheblichen Aufwand an Bauraum verbunden sowie ist ein hoher Grad an zusätzlichem Aufwand für die Montage der Vorrichtung notwendig. Auch liegt grundsätzlich ein hoher Wartungsaufwand vor, insbesondere beim Einsatz in Landmaschinen.

Aus der DE 10 2019 116 593 A1 ist eine Doppelkupplung bekannt, deren direkt- betätigte normal-ausgerückte Teilkupplungen durch ein konzentrisches Betätigungs- system eingerückt werden. Aus der DE 10 2014 212 416 A1 ist eine hebelbetätigte Lamellendoppelkupplung bekannt, deren beide Hebel durch zwei unterschiedliche Gruppen von Stellstiften betätigt werden. Aus der US 2008/078642 A1, der DE 36 28 693 A1 und der DE 695 19 544 T2 sind Traktordoppelkupplungen mit eine normal- eingerückten Fahrkupplung und einer normalausgerückten Nebenabtriebskupplung bekannt.

Der vorliegenden Erfindung liegt die Aufgabe zugrunde, die aus dem Stand der Technik bekannten Probleme zumindest teilweise zu überwinden. Diese Aufgabe wird gelöst mit den Merkmalen des unabhängigen Anspruchs 1. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Die erfindungsgemäße Doppelkupplung mit einer Drehachse umfasst eine erste Teilkupplung und eine zweite Teilkupplung, wobei die erste Teilkupplung in Richtung der Drehachse eine erste Anpressplatte, ein Schwungrad und eine dazwischenliegende erste Kupplungsscheibe umfasst, wobei die erste Anpressplatte und die erste Kupplungsscheibe entlang der Drehachse verschiebbar gelagert sind, wobei die zweite Teilkupplung in Richtung der Drehachse eine zweite Anpressplatte, einen mit einem Gehäuse ortsfest verbundenen Gehäusevorsprung, und eine dazwischenliegende zweite Kupplungsscheibe umfasst, wobei die zweite Anpressplatte und die zweite Kupplungsscheibe entlang der Drehachse verschiebbar gelagert sind,
weiterhin umfasst die erfindungsgemäße Doppelkupplung ein Betätigungssystem mit einem ersten Betätigungshebel zur drückenden Betätigung der ersten Teilkupplung und einen zweiten Betätigungshebel zur drückenden Betätigung der zweiten Teilkupplung, wobei die erste und die zweite Teilkupplung im unbetätigten Zustand ausgerückt sind, und wobei sich mindestens zwei Rückholfedern mit einem Ende auf dem Gehäusevorsprung und mit ihrem anderen Ende an dem ersten Betätigungshebel oder an dem zweiten Betätigungshebel abstützen und der Richtung der Betätigung des ersten und zweiten Betätigungshebels zum Einrücken der ersten und zweiten Teilkupplung entgegenwirken.

Vorsorglich sei angemerkt, dass die hier verwendeten Zahlwörter ("erste", "zweite",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Vorzugsweise ist die Doppelkupplung als trockene Doppelkupplung ausgebildet. Eine nasse Doppelkupplung hat immer ein gewisses Schleppmoment im geöffneten Zustand, dadurch kommt es zu höheren Leerlaufverlusten. Jene Leerlaufverluste treten bei der trockenen Doppelkupplungen nicht auf. Somit hat die trockene Doppelkupplung einen erhöhten Wirkungsgrad gegenüber einer nassen Ausführungsform. Darüber hinaus ist die trockene Doppelkupplung gegenüber einer nassen Doppelkupplung weniger komplex und benötigt weniger Komponenten, da insbesondere ein Ölkühlkreislauf nicht nötig ist. Damit einhergehend weist die trockene Doppelkupplung ebenfalls einen reduzierten Bedarf an Bauraum auf. Aufgrund der reduzierten Komplexität ist auch der Montage- und Wartungsaufwand reduziert. Da diie erfindungsgemäße Doppelkupplung bevorzugt in Landmaschinen wie beispielsweise einem Traktor eingesetzt wird, führt die Reduzierung an Komponenten der Doppelkupplung auch zu einer erleichterten Reparatur, die beispielsweise auch vor Ort, also nicht in einer Werkstatt vorgenommen werden kann.

Die Doppelkupplung wird aus zwei Teilkupplungen gebildet, wobei die erste Teilkupplung zumindest aus den Elementen gebildet wird, die mit "erste/s/n..." gekennzeichnet sind, wobei die zweite Teilkupplung zumindest aus den Elementen gebildet wird, die mit "zweite/s/n..." gekennzeichnet sind.

Unter dem Begriff "im unbetätigten Zustand ausgerückt" wird verstanden, dass die jeweilige Teilkupplung, wenn der zugeordnete Betätigungshebel nicht betätigt wird, also keine Betätigungskraft ausübt, ausgerückt ist, also kein Reibschluss zwischen den jeweiligen Reibpartnern der Teilkupplung besteht. Unter einer drückenden Betätigung wird verstanden, dass im Betätigungsfall der zugeordnete Betätigungshebel eines der Elemente der jeweiligen Teilkupplung in Richtung der anderen drückt, also eine Kraft ausübt, die zu einer Verlagerung der jeweiligen Komponenten der Teilkupplung zum Herstellen eines Reibschlusses dient.

Um eine Betätigung der ersten und/oder zweiten Teilkupplung zu bewirken, ist vorzugsweise der erste Betätigungshebel mittels eines ersten Übertragungselements mit der ersten Anpressplatte wirkverbunden, wobei der zweite Betätigungshebel mittels eines zweiten Übertragungselements mit der zweiten Anpressplatte wirkverbunden ist. Aufgabe des ersten und zweiten Betätigungshebels ist es jeweils, eine Druck- oder Zugkraft, die auf den ersten oder zweiten Betätigungshebel ausgeübt wird, an die erste oder zweite Anpressplatte weiterzugeben. Wird durch den Betätigungshebel eine Druckkraft aufgebracht, so wird dadurch die entsprechende Anpressplatte gegen die anderen Komponenten der jeweiligen Teilkupplung verschoben, um so den Reibschluss zwischen den Komponenten der jeweiligen Teilkupplung herzustellen. Wird eine Zugkraft aufgebracht, so wird der bestehende Reibschluss der jeweiligen Teilkupplung gelöst.

Bei dem Schwungrad handelt es sich um eine Masse mit scheibenförmiger Ausbildung, die unwuchtfrei auf der Drehachse drehbar gelagert ist. Ein Schwungrad wird unter anderem als Energiespeicher kinetischer Energie in Form von Rotationsenergie und Masseträgheit genutzt, indem seine Drehbewegung beziehungsweise Rotation mit möglichst geringem Reibungsverlust zur Verwendung im Bedarfsfall gespeichert wird.

Bei dem Gehäusevorsprung handelt es sich um einen Bereich, der unmittelbar oder auch mittelbar mit dem Gehäuse verbunden ist. Dieser Bereich ist dazu ausgebildet, den Rückholfedern als Widerlager zu dienen und die in oder an dem Gehäusevorsprung lagernden Enden der Rückholfedern ortsfest gegenüber dem restlichen Gehäuse zu halten.

Bei der ersten und der zweiten Kupplungsscheibe handelt es sich um gegenüber dem Gehäuse und innerhalb des Gehäuses rotierende Bauteile, die jeweils radial außenliegend mit einem Reibabschnitt ausgebildet sind, wobei vorzugsweise das Gehäuse zumindest die erste und die zweite Kupplungsscheibe sowie die erste und zweite Anpressplatte koaxial zu der Drehachse umgibt. Mit dem jeweiligen Reibabschnitt kommen die erste und zweite Kupplungsscheibe bei geschlossener Kupplung an der Reibfläche des Schwungrades oder an einer Reibfläche des Gehäuses und der Reibfläche der jeweiligen Anpressplatte zur Bildung eines Reibschlusses in Anlage. Ist ein jeweiliger Reibschluss hergestellt, wird über den Gehäusevorsprung oder/und über das Schwungrad und die jeweilige Anpressplatte ein Drehmoment auf die erste und/oder zweite Kupplungsscheibe übertragen.

Die zwischen der ersten und der zweiten Kupplungsscheibe angeordnete erste und zweite Anpressplatte sind jeweils scheibenförmig ausgebildet und koaxial zu der Drehachse ausgerichtet. Um ein Einrücken oder ein Ausrücken der Teilkupplung herbeizuführen, sind die erste und die zweite Anpressplatte jeweils mittels des ersten oder zweiten Betätigungshebels betätigbar. Der erste und zweite Betätigungshebel werden wiederum ihrerseits vorzugsweise durch ein erstes und ein zweites Betätigungslager betätigt.

Vorzugsweise erfolgt die Betätigung des ersten Betätigungshebels drückend durch das erste Betätigungslager in Richtung des Schwungrades, wobei die Betätigung des zweiten Betätigungshebels ebenfalls drückend durch das zweite Betätigungslager in Richtung des Schwungrades erfolgt. Somit sind die Betätigungsrichtungen, also die Richtungen, um die jeweilige Teilkupplung aus dem ausgerückten in einen eingerückten Zustand zu überführen, identisch.

Vorzugsweise sind die zueinander weisenden Seiten der ersten und zweiten Anpressplatten durch einen an dem Gehäuse angeordneten Anschlag in Richtung der Drehachse voneinander getrennt. Der Anschlag ist vorzugsweise in Form eines Sprengrings ausgebildet, wobei der Sprengring somit die Bewegung der ersten und zweiten Anpressplatte längs der Drehachse einschränkt, beziehungsweise begrenzt. Die erste Anpressplatte ist mit der zu der ersten Kupplungsscheibe weisenden Seite als Reibfläche für den Reibabschnitt der ersten Kupplungsscheibe ausgebildet, wobei die zweite Anpressplatte äquivalent mit der zu der zweiten Kupplungsscheibe weisenden Seite als Reibfläche für den Reibabschnitt der zweiten Kupplungsscheibe ausgebildet ist. Darüber hinaus weist das Schwungrad ebenfalls eine Reibfläche für den Reibabschnitt der ersten Kupplungsscheibe auf der zu der ersten Kupplungsscheibe weisenden Seite auf. Auf der von der von der zweiten Anpressplatte abgewandten Seite der zweiten Kupplungsscheibe ist das Gehäuse mit einer Reibfläche für den Reibabschnitt der zweiten Kupplungsscheibe ausgebildet. Die Reibfläche ist vorzugsweise auf einem Gehäusevorsprung des Gehäuses in Richtung des Schwungrades ausgebildet. Der Anschlag ist innerhalb des Gehäuses so angeordnet, dass die erste und zweite Anpressplatte zumindest bei Anlage an dem Anschlag einen Luftspalt zwischen sich und der jeweiligen Kupplungsscheibe und einen Luftspalt zwischen der jeweiligen Kupplungsscheibe und der gehäuse- oder schwungradseitigen Reibfläche bilden. Der Anschlag ist jedoch nicht auf die Form eines Sprengrings begrenzt. Alternativ bevorzugt kann der Anschlag auch ein Absatz mit geringerem Radius innerhalb des Gehäuses sein, der vorzugsweise einteilig mit dem Gehäuse verbunden ist.

Um ein selbstständiges Ausrücken der ersten und zweiten Teilkupplung zu ermöglichen, stützen sich die Rückholfedern mit einem Ende auf der zum Schwungrad abgewandten Seite an dem Gehäusevorsprung und mit ihrem anderen Ende an dem ersten Betätigungshebel oder an dem zweiten Betätigungshebel ab. Erfolgt durch das erste und das zweite Betätigungslager keine Gegenkraft mehr, wird durch die Rückholfedern der erste und zweite Betätigungshebel weiter gegen das zurückweichende erste und zweite Betätigungslager gehalten. Der erste und zweite Betätigungshebel folgt somit der weiteren Rückbewegung des ersten und zweiten Betätigungslagers. Die erste und zweite Anpressplatte bewegen sich daraufhin ebenfalls von den Reibflächen des Schwungrades beziehungsweise des Gehäusevorsprungs zurück und somit aufeinander zu, wobei sie sich von der ersten beziehungsweise zweiten Kupplungsscheibe abheben. Die maximale Rückbewegung der ersten und zweiten Anpressplatte wird durch den gehäusefesten Anschlag zwischen den beiden Anpressplatten begrenzt.

Vorzugsweise sind das erste und/oder das zweite Übertragungselement als Augenschraube ausgebildet, wobei ferner bevorzugt das erste Übertragungselement und die erste Anpressplatte durch ein Formelement und das zweite Übertragungselement und die zweite Anpressplatte durch ein weiteres Formelement miteinander wirkverbunden sind. Bei einer Augenschraube handelt es sich um einen Bolzen, wobei an einem Ende des Bolzens ein Ring zur Aufnahme beispielsweise eines Lagerstiftes ausgebildet ist, wobei das andere Ende des Bolzens ein Gewinde aufweist. Grundsätzlich ist das erste und zweite Übertragungselement nicht auf die Ausführung als Augenschraube beschränkt. Insbesondere bevorzugt sind das Formelement und das weitere Formelement als Mutter ausgebildet, die komplementär zu dem Gewinde des ersten und zweiten Übertragungselements ausgebildet sind. Aber auch für das Verbindungselement sind verschiedene Ausführungsformen denkbar, die eine form-, stoff- und/oder reibschlüssige Verbindung zwischen der ersten Kupplungsscheibe, dem ersten Übertragungselement sowie zwischen der zweiten Kupplungsscheibe und dem zweiten Übertragungselement schaffen. Darüber hinaus sind die Verbindungselemente auch für die Einstellung des Abstandes zwischen der jeweiligen Reibfläche des Schwungrades beziehungsweise des Gehäusevorsprungs und dem dazugehörigen Reibabschnitt der ersten und zweiten Kupplungsscheibe vorgesehen.

Vorzugsweise sind das Gehäuse und das Schwungrad drehfest miteinander verbunden, so dass das Schwungrad sowohl die Funktion eines Schwungrades als auch eines stirnseitigen Gehäusedeckels erfüllt. Darüber hinaus ist die Masse des Schwungrades durch die drehfest mit diesem verbundenen Komponenten erhöht, was dessen Trägheitsmoment erhöht. Ferner bevorzugt ist auch eine Reduzierung der Masse des eigentlichen Schwungrades, die durch die Masse des Gehäuses kompensiert wird, um Gewicht der gesamten Doppelkupplung einzusparen.

Bevorzugt sind das erste Betätigungslager und das zweite Betätigungslager als Wälzlager ausgebildet, wobei das zweite Betätigungslager einen gegenüber dem Außenradius des ersten Betätigungslagers größeren Innenradius aufweist. Auf der von dem Schwungrad abgewandten Seite des nach Innen weisenden Endes des ersten Betätigungshebels liegt das erstes Betätigungslager an. Ebenfalls liegt auf der von dem Schwungrad abgewandten Seite des nach Innen weisenden Endes des zweiten Betätigungshebels das zweites Betätigungslager an. Das erste und zweite Betätigungslager sind vorzugsweise als Wälzlager ausgebildet, weisen somit jeweils eine ringförmige Gestalt auf. Sowohl das erste Betätigungslager als auch das zweite Betätigungslager sind koaxial zu der Drehachse und in axialer Richtung, in Richtung der Drehachse, hintereinander angeordnet und darüber hinaus jeweils in axialer Richtung verschiebbar gelagert. Das erste Betätigungslager ist dabei in Richtung des Schwungrades innenliegend gegenüber dem zweiten Betätigungslager angeordnet, wobei das zweite Betätigungslager eine größere radiale Erstreckung aufweist als das erste Betätigungslager und der Innenradius des zweiten Betätigungslagers größer ist als der Außenradius des ersten Betätigungslagers. Somit sind das erste und zweite Betätigungslager auch übereinander beziehungsweise ineinander entlang der Drehachse A verschiebbar zueinander angeordnet. Folglich ist ein Öffnen oder Schließen der ersten oder zweiten Teilkupplung unabhängig von einem Öffnen oder Schließen der jeweils anderen Teilkupplung möglich. Gleichzeitig wird ein kompakter Aufbau der Betätigungslager ermöglicht.

Weiterhin wird ein Wendegetriebe vorgeschlagen, welches eine Doppelkupplung wie hier beschrieben umfasst. Die für die Doppelkupplung offenbarten Details und Vorteile lassen sich auf das Wendegetriebe anwenden und übertragen und umgekehrt.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1:: einen schematischen Querschnitt der erfindungsgemäßen Doppelkupplung im verbauten Zustand;
- Fig. 2:: eine schematische Darstellung einer ersten Teilkupplung der erfindungsgemäßen Doppelkupplung; und
- Fig. 3:: eine schematische Darstellung einer zweiten Teilkupplung der erfindungsgemäßen Doppelkupplung.

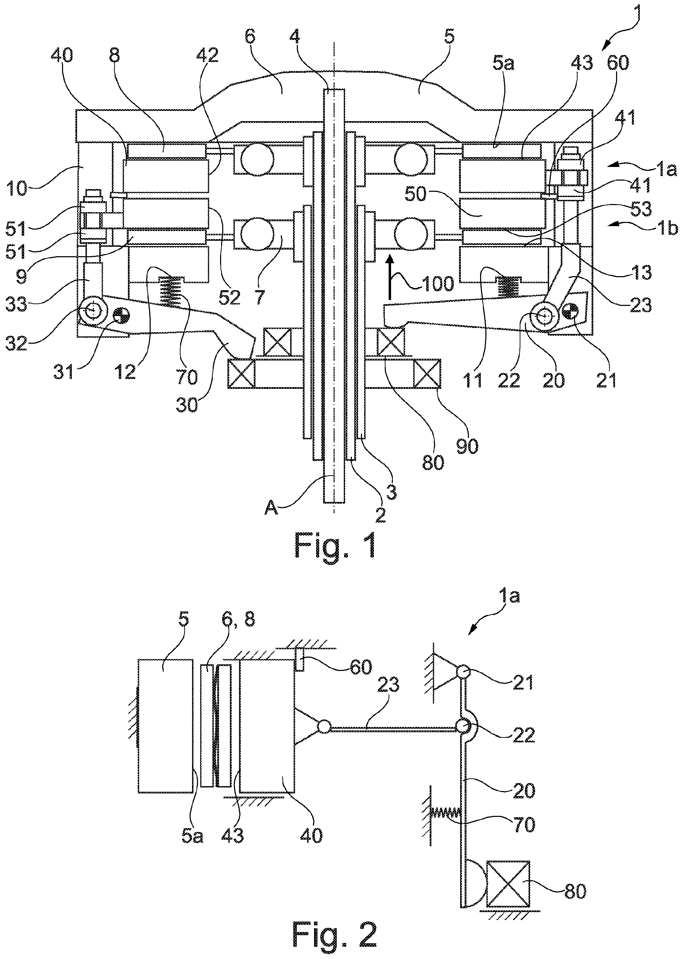

Fig. 1 zeigt einen schematischen Querschnitt einer Doppelkupplung 1. Diese besteht aus einem Schwungrad 5, das koaxial zu seiner Drehachse A mit einer dritten Getriebewelle 4 drehfest sowie an seinem radial äußeren und umfangsseitigen Ende mit einem umlaufenden Gehäuse 10 verbunden ist. Die dritte Getriebewelle 4 ist vorzugsweise dazu ausgebildet, einen nicht dargestellten Antrieb, vorzugsweise einen Verbrennungsmotor, direkt mit einer ebenfalls nicht dargestellten Nebenantriebswelle zu verbinden Koaxial zu der dritten Getriebewelle 4 ist eine als Hohlwelle ausgebildete erste Getriebewelle 2 auf der Außenumfangsfläche der dritten Getriebewelle 4 drehbar, sowie in axialer Richtung entlang der Drehachse A verschiebbar gelagert. An dem zum Schwungrad 5 weisenden Ende ist die erste Getriebewelle 2 drehfest mit einer radial nach außen weisenden ersten Kupplungsscheibe 6 drehfest verbunden. Die erste Getriebewelle 2 ist dazu ausgebildet, über die erste Kupplungsscheibe 6 den Vorwärtsgang zu schalten. Darüber hinaus ist koaxial zu der ersten und dritten Getriebewelle 2, 4 eine zweite Getriebewelle 3 auf der Außenumfangsfläche der ersten Getriebewelle 2 drehbar sowie in axialer Richtung entlang der Drehachse A verschiebbar gelagert. Die zweite Getriebewelle 3 ist in Richtung des Schwungrades 5 verkürzt gegenüber der ersten Getriebewelle 2 ausgebildet. Die zweite Getriebewelle 3 ist hingegen dazu ausgebildet, über die zweite Kupplungsscheibe 7 den Rückwärtsgang zu schaltenSo kann die Doppelkupplung 1 insbesondere mit einem Wendegetriebe eines Kraftfahrzeugs wie insbesondere einer Landmaschine verbunden werden, in welchem über den Wechsel zwischen erster Getriebewelle 2 und zweiter Getriebewelle 3 ein direkter Richtungswechsel der Fahrtrichtung des Kraftfahrzeugs erreicht werden.. Alternativ ist die erste Getriebewelle 2 dazu ausgebildet, über die erste Kupplungsscheibe 6 den Rückwärtsgang und die zweite Getriebewelle 3 dazu ausgebildet, über die zweite Kupplungsscheibe 7 den Vorwärtsgang zu schalten.

An dem zur ersten Kupplungsscheibe 6 weisenden Ende der zweiten Getriebewelle 3 ist die zweite Getriebewelle 3 drehfest mit einer radial nach außen weisenden zweiten Kupplungsscheibe 7 verbunden, wobei die erste und die zweite Kupplungsscheibe 6, 7 eine identische radiale Erstreckung aufweisen. Zwischen der ersten und der zweiten Kupplungsscheibe 6, 7 ist eine erste Anpressplatte 40 und eine zweite Anpressplatte 50 angeordnet. Die erste und die zweite Anpressplatte 40, 50 sind jeweils als Scheibe ausgebildet und koaxial zu der Drehachse A angeordnet, wobei die erste und die zweite Anpressplatte 40, 50 nach außen hin eine radiale Erstreckung aufweisen und nach innen, zur Drehachse A hin, jeweils mit einer Durchgangsöffnung 42, 52 versehen sind, durch die sich die erste, zweite und dritte Getriebewelle 2, 3, 4 erstrecken. Die zueinander weisenden Seiten der ersten und zweiten Anpressplatte 40, 50 sind durch einen an dem Gehäuse 10 befestigten und koaxial umlaufend zu der Drehachse A angeordneten Anschlag 60, in Form eines Sprengrings, voneinander getrennt. An dem Gehäuse 10 sind ein erster Betätigungshebel 20 und ein zweiter Betätigungshebel 30 jeweils mit einem Ende schwenkbar gelagert, wobei sich jeweils der erste und zweite Betätigungshebel 20, 30 von einem jeweiligen Schwenklager 21, 31 an dem Gehäuse 10 in radialer Richtung zu der Drehachse A hin nach Innen erstrecken. Das andere, nach Innen weisende Ende des ersten und zweiten Betätigungshebels 20, 30 ist in Richtung der Drehachse A und um das jeweilige Schwenklager 21, 31 verschwenkbar gelagert. Auf der von dem Schwungrad 5 abgewandten Seite des nach Innen weisenden Endes des ersten Betätigungshebels 20 liegt ein erstes Betätigungslager 80 an. Ebenfalls liegt auf der von dem Schwungrad 5 abgewandten Seite des nach Innen weisenden Endes des zweiten Betätigungshebels 30 ein zweites Betätigungslager 90 an. Dargestellt sind in Fig. 1 nur jeweils ein erster und ein zweiter Betätigungshebel 20, 30, allerdings sind vorzugsweise über den Umfang des Gehäuses 10 eine Mehrzahl an ersten und zweiten Betätigungshebeln 20, 30 vorgesehen.

Das erste und zweite Betätigungslager 80, 90 sind als Wälzlager ausgebildet, weisen somit jeweils eine ringförmige Gestalt auf. Sowohl das erste Betätigungslager 80 als auch das zweite Betätigungslager 90 sind koaxial zu der Drehachse A und in axialer Richtung, nämlich in Richtung der Drehachse A, hintereinander angeordnet und auch jeweils in axialer Richtung verschiebbar gelagert. Das erste Betätigungslager 80 ist dabei in Richtung des Schwungrades 5 innenliegend gegenüber dem zweiten Betätigungslager 90 angeordnet, wobei das zweite Betätigungslager 90 eine größere radiale Erstreckung aufweist als das erste Betätigungslager und der Innenradius des zweiten Betätigungslagers 80 größer ist als der Außenradius des ersten Betätigungslagers 80. Somit sind das erste und zweite Betätigungslager 80, 90 auch übereinander beziehungsweise ineinander entlang der Drehachse A verschiebbar zueinander angeordnet. Auch wenn nicht dargestellt, sind die als Wälzlager ausgebildeten ersten und zweite Betätigungslager jeweils mit einem Innen- und einem Außenring versehen, wobei sich der Innenring oder der Außenring an dem ersten oder zweiten Betätigungshebel 20, 30 abstützen.

An dem ersten Betätigungshebel 20 ist gegenüber dem Schwenklager 21 radial innenseitig ein weiteres Schwenklager 22 vorgesehen, wobei an dem weiteren Schwenklager 22 ein erstes Übertragungselement 23 mit einem Ende gelagert ist. Das erste Übertragungselement 23 erstreckt sich ausgehend von dem weiteren Schwenklager 22 parallel zu der Drehachse A in Richtung des Schwungrades 5. Das erste Übertragungselement 23 ist als Augenschraube ausgebildet, wobei das Auge die Aufnahme für das weitere Schwenklager 22 bildet. Das von dem Auge abgewandte Ende des ersten Übertragungselements 23 ist als Bolzen ausgebildet und mit einem Außengewinde versehen. An dem zum Schwungrad 5 weisenden Ende ist das erste Übertragungselement 23 mit der ersten Anpressplatte 40 form- und reibschlüssig durch ein Formelement 41 in Form von Schraubverbindungen, die auf den Gewindeabschnitt des ersten Übertragungselements 23 geschraubt sind, wirkverbunden. Die erste Anpressplatte 40 ist mit der zu der ersten Kupplungsscheibe 6 weisenden Seite mit einer Reibfläche 43 für einen Reibabschnitt 8 der ersten Kupplungsscheibe 6 ausgebildet. Darüber hinaus weist das Schwungrad 5 ebenfalls eine Reibfläche 5a für den Reibabschnitt 8 der ersten Kupplungsscheibe 6 auf der zu der ersten Kupplungsscheibe 6 weisenden Seite auf.

An dem zweiten Betätigungshebel 30 ist gegenüber dem Schwenklager 31 radial außenseitig ebenfalls ein weiteres Schwenklager 32 vorgesehen, wobei an dem weiteren Schwenklager 32 ein zweites Übertragungselement 33 mit einem Ende gelagert ist. Das zweite Übertragungselement 33 erstreckt sich ausgehend von dem weiteren Schwenklager 32 ebenfalls parallel zu der Drehachse A in Richtung des Schwungrades 5. Das zweite Übertragungselement 33 ist, so wie auch das erste Übertragungselement 23, als Augenschraube ausgebildet, wobei das Auge die Aufnahme für das weitere Schwenklager 32 bildet. Das von dem Auge abgewandte Ende des zweiten Übertragungselements 3 ist als Bolzen ausgebildet und mit einem Außengewinde versehen. An dem zum Schwungrad 5 weisenden Ende ist das zweite Übertragungselement 33 mit der zweiten Anpressplatte 50 form- und reibschlüssig durch ein Formelement 51 in Form von Schraubverbindungen, die auf den Gewindeabschnitt des zweiten Übertragungselements 33 geschraubt sind, wirkverbunden. Die zweite Anpressplatte 50 ist mit der zu der zweiten Kupplungsscheibe 7 weisenden Seite als Reibfläche 53 für einen Reibabschnitt 9 der zweiten Kupplungsscheibe 7 ausgebildet. Auch für das erste und zweite Übertragungselement 23, 33 sowie die Formelemente 41, 51 gilt das zu den ersten und zweiten Betätigungshebeln 20, 30 gesagte, dass die Figur zwar nur zwei Betätigungshebel 20, 30 darstellt, jedoch mehrere Übertragungselemente 23, 33, entsprechend der Anzahl der Hebelelemente 20, 30, über den Umfang des Gehäuses 10 verteilt sind. Sowohl der mindestens eine erste Betätigungshebel 20 als auch der mindestens eine zweite Betätigungshebel 30 wird zum Betätigen der jeweiligen Teilkupplung 1a, 1b in eine gemeinsame Betätigungsrichtung 100 bewegt. Beide Teilkupplungen 1a, 1b sind normal ausgerückt, so dass die Betätigung der jeweiligen Teilkupplung 1a, 1b ein Einrücken der entsprechenden Teilkupplung 1a, 1b bewirkt.

Auf der von dem Schwungrad 5 abgewandten Seite der zweiten Kupplungsscheibe 7 ist ein nach radial innenweisender und um die Drehachse A umlaufender Gehäusevorsprung 11 an dem Gehäuse 10 ausgebildet. Der Gehäusevorsprung 11 ist mit einer Reibfläche 13 auf der zu der zweiten Kupplungsscheibe 7 weisenden Seite ausgebildet. Das Gehäuse 10 mit dem dazugehörigen Gehäusevorsprung 11 sowie das Schwungrad 5 sind darüber hinaus dazu ausgebildet, einen Schmutzeintrag in die Doppelkupplung zu vermeiden und durch ihre Gestalt dazu ausgebildet, besonders schnell Wärme zu dissipieren.

Darüber hinaus ist der Gehäusevorsprung 11 auf der von der zweiten Kupplungsscheibe 7 abgewandten Seite mit Aufnahmen 12 für Rückholfedern 70 ausgebildet. Die Rückholfedern 70 stützten sich dabei jeweils mit einem Ende an beziehungsweis in den Aufnahmen 12 an dem Gehäusevorsprung 11 und mit ihrem anderen Ende an dem ersten oder zweiten Betätigungshebel 20, 30 ab. Für die Rückholfedern 70 sind beliebige Ausführungsformen möglich, vorzugsweise in Form von Druckfedern, Zugfedern oder Schenkelfedern. Gemäß der Kennzeichnung mit "erste/s'" oder "zweite/s" wird die erste Teilkupplung 1a zumindest aus dem Schwungrad 5, der ersten Kupplungsscheibe 6, der ersten Anpressplatte 40, dem ersten Übertragungselement 23, dem ersten Betätigungshebel 20 und dem ersten Betätigungslager 80 gebildet. Die zweite Teilkupplung 1b wird zumindest aus dem Gehäusevorsprung 11, der zweiten Kupplungsscheibe 7, der zweiten Anspressplatte 50, dem zweiten Übertragungselement 33, dem zweiten Betätigungshebel 30 und dem zweiten Betätigungslager 90 gebildet.

Fig. 2 zeigt eine schematische Darstellung einer ersten Teilkupplung 1a der erfindungsgemäßen Doppelkupplung 1 unter Ausblendung der zweiten Teilkupplung 1b, zur Verdeutlichung der Funktionsweise der Vorrichtung. Wie bereits in der vorangegangenen Beschreibung dargelegt, wird die erste Teilkupplung 1a zumindest aus den Elementen gebildet, die mit "erste/s/n..." gekennzeichnet sind, wobei die zweite Teilkupplung 1b zumindest aus den Elementen gebildet wird, die mit "zweite/s/n..." gekennzeichnet sind.

Um einen Reibschluss zwischen der ersten Kupplungsscheibe 6 und einer Reibfläche 5a des Schwungrades 5 zu schaffen beziehungsweise den ersten Kupplungsteil 1a der Doppelkupplung 1 einzurücken, wird zunächst eine Betätigungskraft in Betätigungsrichtung 100, nämlich in Richtung des Schwungrades 5, durch das erste Betätigungslager 80 auf den ersten Betätigungshebel 20 übertragen. Durch das erste Übertragungselement 23 in Form der Augenschraube wird die Kraft in Form von Druck und der Weg entsprechend der Hebelübersetzung auf die erste Anpressplatte 40 übertragen. Die erste Anpressplatte 40 folgt so der Hebelbewegung und bewegt sich in Richtung der Reibfläche 5a des Schwungrades 5. Dementsprechend wird die erste Kupplungsscheibe 6 zwischen der Reibfläche 43 der ersten Anpressplatte 40 und der Reibfläche 5a des Schwungrades 5 geklemmt, wobei unter Reibwirkung eine Momentenübertragung von der mit dem Schwungrad 5 drehfest verbundenen dritten Getriebewelle 4 auf die erste Getriebewelle 2 erfolgt.

Um die erste Teilkupplung 1a zu öffnen und einen Luftspalt zwischen dem Schwungrad 5 und der ersten Kupplungsscheibe 6 zu erzeugen, wird die Betätigungskraft am ersten Betätigungslager 80 in Richtung des Schwungrads 5 reduziert, so dass sich das erste Betätigungslager 80 von dem Schwungrad 5 wegbewegt. Zunächst wird durch eine nicht dargestellte Belagsfederung der ersten Kupplungsscheibe 6 die erste Anpressplatte 40 in entgegengesetzter Richtung zu der Schwungrad 5 entlang der Drehachse A zurückbewegt. Erfolgt durch die erste Kupplungsscheibe 6 keine Gegenkraft mehr, wird durch die Rückholfeder 70 der erste Betätigungshebel 20 weiter gegen das zurückweichende erste Betätigungslager 80 gehalten. Der erste Betätigungshebel 20 folgt somit der weiteren Rückbewegung des ersten Betätigungslagers 80. Die erste Anpressplatte 40 bewegt sich daraufhin ebenfalls zurück und hebt sich von der ersten Kupplungsscheibe 6 ab. Die maximale Rückbewegung der ersten Anpressplatte 40 wird durch den gehäusefesten Anschlag 60 begrenzt, somit ist ebenfalls die maximale Rückbewegung des ersten Betätigungshebels 20 vorgegeben. Die erste Teilkupplung 1a ist also als eine normal ausgerückte (im unbetätigten Zustand ausgerückte) Reibkupplung ausgebildet, die durch den ersten Betätigungshebel 20 drückend betätigt wird.

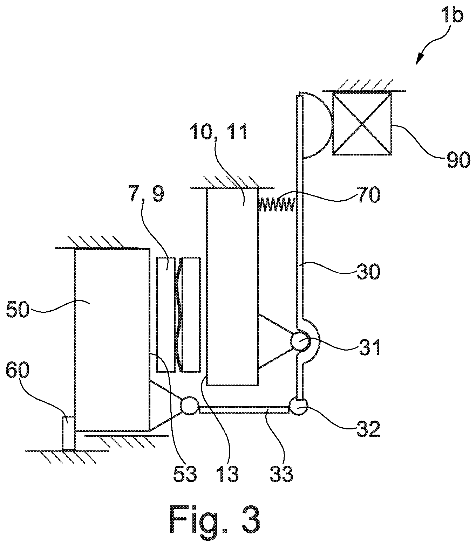

Fig. 3 zeigt eine schematische Darstellung einer zweiten Teilkupplung 1b der erfindungsgemäßen Doppelkupplung 1, jetzt unter Ausblendung der ersten Teilkupplung 1a, zur Verdeutlichung der Funktionsweise der Vorrichtung. Um auch einen Reibschluss zwischen der zweiten Kupplungsscheibe 7 und der Reibfläche 13 des Gehäusevorsprung 11 zu schaffen beziehungsweise auch der zweiten Teilkupplung 1b der Doppelkupplung 1 zu schließen, wird eine zusätzliche Betätigungskraft in Betätigungsrichtung 100, also in Richtung des Schwungrades 5, auf das zweite Betätigungslager 90 und somit auf den zweiten Betätigungshebel 30 drückend ausgeübt. Die Betätigungsrichtung 100 ist somit gleich orientiert wie bei der ersten Teilkupplung 1a beziehungsweise werden zum Schließen einer der Teilkupplungen 1a, 1b der Doppelkupplung 1 das erste und das zweite Betätigungslager 80, 90 in Betätigungsrichtung 100 (vgl. Fig. 1), also in Richtung des Schwungrades 5 entlang der Drehachse A verschoben. Vorzugsweise ist auch eine Bewegung in entgegengesetzter Richtung zu der beschriebenen Bewegung möglich bei gleichbleibendem Effekt bei entsprechend angepassten Schwenklagern 21, 31 des ersten und zweiten Betätigungshebels 20, 30.

Durch das zweite Übertragungselement 33 wird auch in der zweiten Teilkupplung 1b die Kraft und der Weg entsprechend der Hebelübersetzung auf die zweite Anpressplatte 50 übertragen, wobei hier, im Gegensatz zu der ersten Teilkupplung 1a, die zweite Anpressplatte 50 in Richtung des zweiten Betätigungshebels 30 gezogen wird. Die zweite Anpressplatte 50 folgt somit nicht der Hebelbewegung bzw. der Betätigungsrichtung 100 des zweiten Betätigungshebels 30 in Richtung des Schwungrades 5, sondern bewegt sich von dem Schwungrad 5 weg. Dementsprechend wird die zweite Kupplungsscheibe 7 nach einem gewissen Weg gegen die Innenseite des Gehäuses 10 beziehungsweise insbesondere gegen den Gehäusevorsprung 11 gezogen. Durch die übersetzte Betätigungskraft wird die zweite Kupplungsscheibe 7 zwischen der Reibfläche der zweiten Anpressplatte 50 und der Reibfläche 13 des Gehäusevorsprungs 11 geklemmt. Somit wird auch hier eine Reibwirkung zwischen der zweiten Kupplungsscheibe 7 und dem Gehäusevorsprung 11 geschaffen, so dass eine Momentenübertragung von dem mit dem Schwungrad 5 verbundenen Gehäuse 10 an die zweite Getriebewelle 3 stattfinden kann.

Das Öffnen der zweiten Teilkupplung 1b der Doppelkupplung 1 erfolgt äquivalent zu der ersten Teilkupplung 1a. Um auch die zweite Teilkupplung 1b zu öffnen und einen Luftspalt zwischen dem Gehäusevorsprung 11 und der zweiten Kupplungsscheibe 7 zu erzeugen, wird die Betätigungskraft an dem zweiten Betätigungslager 90 in Richtung der Schwungrad 5, welches in der Fig. 3 nicht gezeigt ist und in der Fig. 3 links vom Vorsprung 60 ausgebildet ist (vgl. Fig. 1), reduziert, so dass sich das zweite Betätigungslager 90 von dem Schwungrad 5 wegbewegt. Zunächst wird durch eine nicht dargestellte Belagsfederung der zweiten Kupplungsscheibe 7 die zweite Anpressplatte 50 in Richtung der Schwungrad 5 entlang der Drehachse A zurückbewegt. Erfolgt durch die zweite Kupplungsscheibe 7 keine Gegenkraft mehr, wird durch die Rückholfeder 70 der zweite Betätigungshebel 30 weiter gegen das zurückweichende zweite Betätigungslager 90 gehalten. Der zweite Betätigungshebel 30 folgt somit der weiteren Rückbewegung des zweiten Betätigungslagers 90. Die zweite Anpressplatte 50 bewegt sich daraufhin ebenfalls zurück, allerdings hier entgegengesetzt in Richtung des Schwungrades 5, und hebt sich von der zweiten Kupplungsscheibe 7 ab. Die maximale Rückbewegung der zweiten Anpressplatte 50 wird durch den gehäusefesten Anschlag 60 begrenzt, somit ist ebenfalls die maximale Rückbewegung des zweiten Betätigungshebels 30 vorgegeben. Die zweite Teilkupplung 1b ist also als eine normal ausgerückte (im unbetätigten Zustand ausgerückte) Reibkupplung ausgebildet, die durch den zweiten Betätigungshebel 30 drückend betätigt wird.

Bei der Gesamtanordnung der Doppelkupplung 1, bestehend aus der ersten und zweiten Teilkupplung 1a, 1b, handelt es sich um eine so genannte safety clutch, bei der beide Teilkupplungen 1a, 1b im unbetätigten Zustand ausgerückt, also nicht geschlossen sind und somit keine Momentenübertragung stattfindet. Sowohl für die erste Teilkupplung 1a als auch für die zweite Teilkupplung 1b ist die Betätigungsrichtung zum Einrücken der beiden Teilkupplungen 1a, 1b in Richtung des Schwungrads 5 orientiert, wobei die zwischen dem Gehäusevorsprung 11 und den ersten und zweiten Betätigungshebeln 20, 30 angeordneten Rückholfedern 70 der Richtung der Betätigung entgegenwirken. Insbesondere erfolgt die Betätigung der ersten und zweiten Teilkupplung 1a, 1b drückend, wobei über das erste und zweite Betätigungslager 80, 90 jeweils eine Druckkraft zum Einrücken der jeweiligen Teilkupplung 1a, 1b auf den jeweiligen ersten und/oder zweiten Betätigungshebel 20, 30 ausgeübt wird. Zum Ausrücken der beiden Teilkupplungen 1a, 1b ist hingegen ein Zurückweichen des ersten und zweiten Betätigungshebels 20, 30 in entgegengesetzter Richtung gegeben.

### Bezugszeichenliste

- 1: Doppelkupplung
- 1a: erste Teilkupplung
- 1b: zweite Teilkupplung
- 2: erste Getriebewelle
- 3: zweite Getriebewelle
- 4: dritte Getriebewelle
- 5: Schwungrad
- 5a: Reibfläche
- 6: erste Kupplungsscheibe
- 7: zweite Kupplungsscheibe
- 8: Reibabschnitt erste Kupplungsscheibe
- 9: Reibabschnitt zweite Kupplungsscheibe
- 10: Gehäuse
- 11: Gehäusevorsprung
- 12: Aufnahmen
- 13: Reibfläche
- 20: erster Betätigungshebel
- 21: Schwenklager
- 22: weiteres Schwenklager
- 23: erstes Übertragungselement
- 30: zweiter Betätigungshebel
- 31: Schwenklager
- 32: weiteres Schwenklager
- 33: zweites Übertragungselement
- 40: erste Anpressplatte
- 41: Formelement
- 42: Durchgangsöffnung
- 43: Reibfläche
- 50: zweite Anpressplatte
- 51: Formelement
- 52: Durchgangsöffnung
- 53: Reibfläche
- 60: Anschlag
- 70: Rückholfeder
- 80: erstes Betätigungslager
- 90: zweites Betätigungslager
- 100: Betätigungsrichtung

- A: Drehachse

## Patentansprüche

1. Doppelkupplung (1) mit einer Drehachse (A), umfassend eine erste Teilkupplung (1a) und eine zweite Teilkupplung (1b),
wobei die erste Teilkupplung (1a) in Richtung der Drehachse (A) eine erste Anpressplatte (40), ein Schwungrad (5) und eine dazwischenliegende erste Kupplungsscheibe (6) umfasst, wobei die erste Anpressplatte (40) und die erste Kupplungsscheibe (6) entlang der Drehachse (A) verschiebbar gelagert sind, wobei die zweite Teilkupplung (1b) in Richtung der Drehachse (A) eine zweite Anpressplatte (50), einen mit einem Gehäuse (10) ortsfest verbundenen Gehäusevorsprung (11) und eine dazwischenliegende zweite Kupplungsscheibe (7) umfasst, wobei die zweite Anpressplatte (50) und die zweite Kupplungsscheibe (7) entlang der Drehachse (A) verschiebbar gelagert sind,
weiterhin umfassend ein Betätigungssystem mit einem ersten Betätigungshebel (20) zur drückenden Betätigung der ersten Teilkupplung (1a) und einem zweiten Betätigungshebel (30) zur drückenden Betätigung der zweiten Teilkupplung (1b), und wobei sich mindestens zwei Rückholfedern (70) mit einem Ende auf dem Gehäusevorsprung (11) und mit ihrem anderen Ende an dem ersten Betätigungshebel (20) oder an dem zweiten Betätigungshebel (30) abstützen und der Richtung der Betätigung des ersten und zweiten Betätigungshebels (20, 30) zum Einrücken der ersten und zweiten Teilkupplung (1a, 1b) entgegenwirken,
**dadurch gekennzeichnet, dass**
die erste und die zweite Teilkupplung (1a, 1b) im unbetätigten Zustand ausgerückt sind.

2. Doppelkupplung (1) nach Anspruch 1, durch gekennzeichnet, dass das Gehäuse (10) zumindest die erste und die zweite Kupplungsscheibe (6, 7) sowie die erste und die zweite Anpressplatte (40, 50) koaxial zu der Drehachse (A) umgibt.

3. Doppelkupplung (1) nach Anspruch 1 oder 2, **dadurch gekennzeichnet, dass** der erste Betätigungshebel (20) mittels eines ersten Übertragungselements (23) mit der ersten Anpressplatte (40) wirkverbunden ist, wobei der zweite Betätigungshebel (30) mittels eines zweiten Übertragungselements (33) mit der zweiten Anpressplatte (50) wirkverbunden ist.

4. Doppelkupplung (1) nach einem der vorhergehenden Ansprüche, **dadurch gekennzeichnet, dass** das erste und/oder das zweite Übertragungselement (23, 33) als Augenschraube ausgebildet sind.

5. Doppelkupplung (1) nach einem der vorhergehenden Ansprüche, **dadurch gekennzeichnet, dass** das erste Übertragungselement (23) und die erste Anpressplatte (40) durch ein Formelement (41) und das zweite Übertragungselement (33) und die zweite Anpressplatte (50) durch ein weiteres Formelement (51) miteinander wirkverbunden sind.

6. Doppelkupplung (1) nach Anspruch 5, **dadurch gekennzeichnet, dass** das Formelement (41) und das weitere Formelement (51) als Mutter ausgebildet sind.

7. Doppelkupplung (1) nach Anspruch 6, **dadurch gekennzeichnet, dass** der erste Betätigungshebel (20) durch ein erstes Betätigungslager (80) und der zweite Betätigungshebel (30) durch ein zweites Betätigungslager (90) betätigt wird.

8. Doppelkupplung (1) nach einem der vorhergehenden Ansprüche, **dadurch gekennzeichnet, dass** das Gehäuse (10) und das Schwungrad (5) drehfest miteinander verbunden sind.

9. Doppelkupplung (1) nach Anspruch 7, **dadurch gekennzeichnet, dass** das erste Betätigungslager (80) und das zweite Betätigungslager (90) als Wälzlager ausgebildet sind, wobei das zweite Betätigungslager (80) einen gegenüber dem Außenradius des ersten Betätigungslagers (90) größeren Innenradius aufweist.

10. Wendegetriebe, umfassend eine Doppelkupplung (1) nach einem der vorhergehenden Ansprüche.

## Claims

1. A dual clutch (1) with an axis of rotation (A), comprising a first sub-clutch (1a) and a second sub-clutch (1b),
wherein the first sub-clutch (1a) comprises, in the direction of the axis of rotation (A), a first pressure plate (40), a flywheel (5) and a first clutch disc (6) therebetween, wherein the first pressure plate (40) and the first clutch disc (6) are slidably mounted along the axis of rotation (A), wherein the second sub-clutch (1b) comprises, in the direction of the axis of rotation (A), a second pressure plate (50), a housing projection (11) fixedly connected to a housing (10) and a second clutch disc (7) therebetween, wherein the second pressure plate (50) and the second clutch disc (7) are slidably mounted along the axis of rotation (A),
further comprising an actuating system with a first actuating lever (20) for pressing actuation of the first sub-clutch (1a) and a second actuating lever (30) for pressing actuation of the second sub-clutch (1b), and wherein at least two return springs (70) are supported with one end on the housing projection (11) and with their other end on the first actuating lever (20) or on the second actuating lever (30) and counteract the direction of actuation of the first and second actuating levers (20, 30) to engage the first and second sub-clutches (1a, 1b), **characterised in that** the first and the second sub-clutches (1a, 1b) are disengaged in the unactuated state.

2. The dual clutch (1) according to claim 1, **characterised in that** the housing (10) surrounds at least the first and second clutch discs (6, 7) and the first and second pressure plates (40, 50) coaxially to the axis of rotation (A).

3. The dual clutch (1) according to claim 1 or 2, **characterised in that** the first actuating lever (20) is operatively connected to the first pressure plate (40) by means of a first transmission element (23), wherein the second actuating lever (30) is operatively connected to the second pressure plate (50) by means of a second transmission element (33).

4. The dual clutch (1) according to any one of the preceding claims, **characterised in that** the first and/or the second transmission element(s) (23, 33) are designed as eye bolts.

5. The dual clutch (1) according to any one of the preceding claims, **characterised in that** the first transmission element (23) and the first pressure plate (40) are operatively connected to each other by a shaped element (41) and the second transmission element (33) and the second pressure plate (50) are operatively connected to each other by a further shaped element (51).

6. The dual clutch (1) according to claim 5, **characterised in that** the shaped element (41) and the further shaped element (51) are designed as nuts.

7. The dual clutch (1) according to claim 6, **characterised in that** the first actuating lever (20) is actuated by a first actuating bearing (80) and the second actuating lever (30) is actuated by a second actuating bearing (90).

8. The dual clutch (1) according to any one of the preceding claims, **characterised in that** the housing (10) and the flywheel (5) are non-rotatably connected to each other.

9. The dual clutch (1) according to claim 7, **characterised in that** the first actuating bearing (80) and the second actuating bearing (90) are designed as rolling bearings, wherein the second actuating bearing (80) has a larger inner radius than the outer radius of the first actuating bearing (90).

10. A reversing transmission comprising a dual clutch (1) according to any one of the preceding claims.

## Revendications

1. Double embrayage (1) comportant un axe de rotation (A), comprenant un premier sous-embrayage (1a) et un second sous-embrayage (1b),
dans lequel le premier sous-embrayage (1a) comprend un premier plateau de pression (40), un volant d'inertie (5) et un premier disque d'embrayage (6) placé entre ceux-ci dans la direction de l'axe de rotation (A), dans lequel le premier plateau de pression (40) et le premier disque d'embrayage (6) sont montés de manière coulissante le long de l'axe de rotation (A), dans lequel le second sous-embrayage (1b) comprend un second plateau de pression (50), une saillie de carter (11) reliée de manière fixe à un carter (10) et un second disque d'embrayage (7) placé entre ceux-ci dans la direction de l'axe de rotation (A), dans lequel le second plateau de pression (50) et le second disque d'embrayage (7) sont montés de manière coulissante le long de l'axe de rotation (A),
comprenant en outre un système d'actionnement comportant un premier levier d'actionnement (20) pour actionner par pression le premier sous-embrayage (1a) et un second levier d'actionnement (30) pour actionner par pression le second sous-embrayage (1b), et dans lequel au moins deux ressorts de rappel (70) s'appuient avec une extrémité sur la saillie de carter (11) et avec leur autre extrémité sur le premier levier d'actionnement (20) ou sur le second levier d'actionnement (30) et s'opposent à la direction d'actionnement des premier et second leviers d'actionnement (20, 30) pour embrayer les premier et second sous-embrayages (1a, 1b), **caractérisé en ce que** les premier et second sous-embrayages (1a, 1b) sont débrayés à l'état non actionné.

2. Double embrayage (1) selon la revendication 1, **caractérisé en ce que** le carter (10) entoure au moins les premier et second disques d'embrayage (6, 7) ainsi que les premier et second plateaux de pression (40, 50) coaxialement à l'axe de rotation (A).

3. Double embrayage (1) selon la revendication 1 ou 2, **caractérisé en ce que** le premier levier d'actionnement (20) est relié fonctionnellement au premier plateau de pression (40) au moyen d'un premier élément de transmission (23), dans lequel le second levier d'actionnement (30) est relié fonctionnellement au second plateau de pression (50) au moyen d'un second élément de transmission (33).

4. Double embrayage (1) selon l'une quelconque des revendications précédentes, **caractérisé en ce que** le premier et/ou le second élément de transmission (23, 33) sont conçus comme un boulon à œil.

5. Double embrayage (1) selon l'une quelconque des revendications précédentes, **caractérisé en ce que** le premier élément de transmission (23) et le premier plateau de pression (40) sont reliés fonctionnellement l'un à l'autre par un élément moulé (41) et le second élément de transmission (33) et le second plateau de pression (50) par un autre élément moulé (51).

6. Double embrayage (1) selon la revendication 5, **caractérisé en ce que** l'élément moulé (41) et l'autre élément moulé (51) sont conçus comme un écrou.

7. Double embrayage (1) selon la revendication 6, **caractérisé en ce que** le premier levier d'actionnement (20) est actionné par un premier palier d'actionnement (80) et le second levier d'actionnement (30) est actionné par un second palier d'actionnement (90).

8. Double embrayage (1) selon l'une quelconque des revendications précédentes, **caractérisé en ce que** le carter (10) et le volant d'inertie (5) sont reliés l'un à l'autre de manière solidaire en rotation.

9. Double embrayage (1) selon la revendication 7, **caractérisé en ce que** le premier palier d'actionnement (80) et le second palier d'actionnement (90) sont conçus comme des paliers à roulements, dans lequel le second palier d'actionnement (80) présente un rayon intérieur plus grand que le rayon extérieur du premier palier d'actionnement (90).

10. Transmission réversible, comprenant un double embrayage (1) selon l'une quelconque des revendications précédentes.
